# EUROPÄISCHE PATENTSCHRIFT

(11) **EP 2 246 222 B1**
(45) Veröffentlichungstag und Bekanntmachung des Hinweises auf die Patenterteilung: **19.09.2012**
(21) Anmeldenummer: 10150335.7
(22) Anmeldetag: 08.01.2010
(51) Int. Cl.: B60R 21/13

(54) **Überrollschutzsytem für Kraftfahrzeuge**
Rollover protection for motor vehicles
Système de protection contre les tonneaux pour des véhicules automobiles

(43) Veröffentlichungstag der Anmeldung: 03.11.2010
(73) Patentinhaber: ISE Automotive GmbH, 51702 Bergneustadt (DE)
(72) Erfinder: Nass, Michael, 51702 Bergneustadt (DE)
(74) Vertreter: Kalkoff & Partner

(56) Entgegenhaltungen:
- EP-A2- 0 411 448
- DE-C1- 19 860 165
- DE-C2- 19 750 693

## Beschreibung

Die Erfindung betrifft ein Überrollschutzsystem für Kraftfahrzeuge, mit
- einem fahrzeugfest anordbaren Grundkörper,
- einem mittels einer Aktuatoreinheit gegenüber dem Grundkörper zwischen einer Lagerungsposition und einer Überschlagsposition verstellbaren Überrollkörper und
- einer den Überrollkörper in Richtung auf die Überschlagsposition vorspannenden Antriebseinheit.

Überrollschutzsysteme der eingangs genannten Art sind in vielfältigen Ausgestaltungen aus dem Stand der Technik bekannt. Sie dienen bei Cabriolets aller Art zum Schutz der Insassen bei einem Überschlag, wobei die in der Überschlagsposition aufgestellten Überrollkörper den Insassen einen Überlebensraum bereitstellen, wenn das Fahrzeug auf den Überrollkörpern abrollt.

Neben starr am Fahrzeug angeordneten Überrollbügeln, welche sich sowohl über die gesamte Fahrzeugbreite erstrecken, aber auch nur jeweils hinter einem Fahrzeugssitz angeordnet sein können, werden vermehrt sogenannte aktive Überrollschutzsysteme eingesetzt, bei denen die Überrollkörper im Normalzustand in einer Lagerungsposition befindlich sind und nur im Gefahrenfall, nämlich bei einem drohenden Überschlag in eine Überschlagsposition verstellt werden, in der sie in Verbindung mit der Karosserie einen Überlebensraum bereitstellen.

Überrollkörper, bspw. Überrollbügel, die hinter den Fahrzeugssitzen angeordnet sind und sich im Falle eines Überschlags selbsttätig aufstellen, stellen eine bevorzugte Ausführungsform eines aktiven Überrollschutzsystems dar. Der Überrollkörper ist dabei in der Lagerungsposition zum Beispiel durch eine Antriebseinheit in Richtung auf die Überschlagsposition vorgespannt arretiert. Im Überschlagsfall erfolgt sensorgesteuert eine Freigabe des Überrollkörpers, so dass dieser, angetrieben durch die Antriebseinheit, in die Überschlagsposition gelangt. Die Freigabe des Überrollkörpers erfolgt in der Regel durch die Verwendung einer Aktuatoreinheit. Dabei werden aufgrund der geforderten schnellen Reaktionszeiten vorzugsweise pyrotechnische Aktuatoren verwendet, die im Bedarfsfall eine blitzartige Aufstellung der Überrollkörper gewährleisten können.

Die aus dem Stand der Technik bekannten Überrollschutzsysteme weisen den Nachteil auf, dass diese in der Regel eine separate mechanische Verriegelungseinheit aufweisen, welche den Überrollkörper in der Lagerungsposition arretiert. Die Verriegelungseinheiten werden dabei durch Aktuatoreinheiten angetrieben, welche im Zusammenwirken mit den Verriegelungseinheiten im Bedarfsfall eine Freigabe des Überrollkörpers bewirken. Derartige Überrollschutzsysteme weisen ferner den Nachteil auf, dass Testauslösungen nur mit einem sehr hohen Aufwand durchgeführt werden können. So ist es im Fall der Verwendung von pyrotechnischen Aktuatoren nach einer Testauslösung in jedem Fall erforderlich, auch einen Austausch der aktivierten Aktuatoren vorzunehmen, was hohe Kosten zur Folge hat.

Der Erfindung liegt die Aufgabe zugrunde, ein Überrollschutzsystem bereitzustellen, welches einen einfachen Aufbau aufweist und eine aktuatoreinheitunabhängige, testweise Auslösung des Überrollkörpers ermöglicht.

DE 19 860 165 C1 beschreibt ein Überrollschutzsystem gemäß dem Oberbegriff des Anspruchs 1.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Kennzeichnend für das erfindungsgemäße Überrollschutzsystem ist, dass an dem Überrollkörper ein Verriegelungsmittel angeordnet ist, mittels dem der Überrollkörper in der Lagerungsposition an dem Grundkörper arretiert ist und dass der Überrollkörper mittels der Aktuatoreinheit gegenüber dem Grundkörper aus der Lagerungsposition in eine Freigabeposition verstellbar ist, in der das Verriegelungsmittel mit dem Grundkörper außer Eingriff kommt.

Wesentlich für das erfindungsgemäße Überrollschutzsystem ist, dass der Überrollkörper im Wesentlichen direkt unter Verwendung des mit dem Grundkörper in der Lagerungsposition zusammenwirkenden Verriegelungsmittels an dem Grundkörper des Überrollschutzsystems in der Lagerungsposition festgelegt ist. Der Grundkörper ist dabei ein Bauteil des Überrollschutzsystems, welches im montierten Zustand am Fahrzeug ortsfest angeordnet ist, so dass der Überrollkörper relativ gegenüber dem Grundkörper und dem Fahrzeug verstellbar ist. Der Grundkörper kann bspw. durch ein den Überrollkörper aufnehmendes und führendes Gehäuse, welches den Überrollkörper unmittelbar umgibt, aber auch durch eine sich in der Einbaulage in Fahrzeugquerrichtung erstreckende Traverse gebildet sein.

Erfindungsgemäß ist vorgesehen, dass neben einer Verstellbarkeit des Überrollkörpers zur Erreichung der Überschlagsposition der Überrollkörper zusätzlich derart gegenüber dem Grundkörper verstellbar ist, dass das Verriegelungsmittel mit dem Grundkörper außer Eingriff kommt, damit eine Verstellung des Überrollkörpers in die Überschlagsposition erfolgen kann. Hierzu dient die Aktuatoreinheit, die eine Verschiebung des Überrollkörpers aus der Lagerungsposition in eine Freigabeposition bewirkt.

Die erfindungsgemäße Ausgestaltung des Überrollschutzsystems ermöglicht es, auf ein komplex aufgebautes Verriegelungssystem zu verzichten. Darüber hinaus besteht die einfache Möglichkeit der Durchführung einer Testauslösung, wobei hierzu lediglich eine manuelle Verschiebung des Überrollkörpers aus der Lagerungsposition in die Freigabeposition erforderlich ist. Eine Aktivierung der Aktuatoreinheit ist hierzu nicht erforderlich, so dass eine kostengünstige Prüfung der montierten Überrollschutzsysteme ohne Weiteres möglich ist. Die Prüfung kann dabei jederzeit, d. h. sowohl im Rahmen einer Fertigungsendkontrolle als auch zu einem späteren Zeitpunkt am Fahrzeug im Rahmen von Inspektionsarbeiten problemlos durchgeführt werden.

Wie bereits dargestellt ist es zur Auslösung des Überrollschutzsystems erforderlich, eine Verschiebung des Überrollkörpers aus der Lagerungsposition in die Freigabeposition zu bewirken, so dass dieser dann in die Überschlagsposition gelangen kann. Die zur Verschiebung verwendete Aktuatoreinheit kann dabei grundsätzlich an beliebiger Stelle angeordnet werden. Besonders vorteilhafterweise ist die Aktuatoreinheit jedoch außenseitig, insbesondere im Bereich an der Ober- oder Unterseite des Grundkörpers mit dem Überrollkörper in Eingriff bringbar angeordnet. Die Anordnung der Aktuatoreinheit im Bereich des Grundkörpers oder direkt an dem Grundkörper ermöglicht auch im montierten Zustand des Überrollschutzsystems eine einfache Zugänglichkeit zu der Aktuatoreinheit, insbesondere wenn diese gemäß der vorteilhaften Ausgestaltung der Erfindung an einer Oberseite des Grundkörpers angeordnet ist. Somit besteht in einfacher Weise die Möglichkeit der Durchführung von Inspektions- und Wartungsarbeiten auch im eingebauten Zustand des Überrollschutzsystems im Fahrzeug. In der Regel ist es hierfür lediglich erforderlich, eine die Aktuatoreinheit bzw. den Überrollkörper überdeckende Abdeckung zu entfernen, um Zugang zu der Aktuatoreinheit zu erlangen.

Die entsprechend dieser Ausgestaltung der Erfindung variablen Anordnungsmöglichkeiten der Aktuatoreinheit ermöglichen es überdies, den Vorgaben der Fahrzeughersteller an die Anordnung der Versorgungs- und Steuerungsleitungen in einfacher Weise nachzukommen.

Die Ausgestaltung der Aktuatoreinheit kann grundsätzlich frei gewählt werden. Nach einer besonders vorteilhaften Ausgestaltung wird als Aktuatoreinheit jedoch ein pyrotechnischer Aktuator verwendet. Dieser zeichnet sich durch seine kurze Reaktionszeit und hohe Zuverlässigkeit aus. Pyrotechnische Aktuatoren, bei denen zur Auslösung in der Regel ein Stift aus dem Aktuatorgehäuse herausschnellt, können in besonders einfacher Weise zur Verstellung des Überrollkörpers genutzt werden. Der Stift bewirkt dabei eine Verstellung des Überrollkörpers gegenüber dem Grundkörper aus der Lagerungsposition in die Freigabeposition. Besonders vorteilhafterweise greift dabei der Stift direkt an dem Überrollkörper an, so dass auf zusätzliche Kopplungsmittel verzichtet werden kann.

Die Ausgestaltung des an dem Überrollkörper angeordneten Verriegelungsmittels, mittels dem der Überrollkörper an dem Grundkörper arretiert ist, kann grundsätzlich beliebig ausgebildet sein. Denkbar sind bspw. hakenförmige Elemente oder Ösen, die in der Lagerungsposition mit einer entsprechenden Aufnahme an dem Grundkörper zusammenwirken. Nach einer besonders vorteilhaften Ausgestaltung der Erfindung ist das Verriegelungsmittel jedoch durch einen vom dem Überrollkörper vorstehenden Verriegelungsbolzen gebildet. Dieser weist den Vorteil auf, dass er in besonders einfacher Weise an dem Überrollkörper angeordnet werden kann und überdies eine besonders kostengünstige Ausführung des Verriegelungsmittels darstellt.

Zur Arretierung des Überrollkörpers mittels des Verriegelungsbolzens an dem Grundkörper ist es lediglich erforderlich, diesen in einer Ausnehmung an dem Grundkörper anzuordnen. Die Ausnehmung weist dabei eine Anlagefläche zur Anordnung des Verriegelungsbolzens auf, so dass eine Verstellung des Überrollkörpers in Längsachsenrichtung blockiert ist. Besonders vorteilhafterweise befindet sich der Bolzen, bzw. das Verriegelungsmittel dabei in der Lagerungsposition in einer einerseits offenen Ausnehmung des Grundkörpers, wodurch eine gute Zugänglichkeit für den Verriegelungsbolzen gewährleistet ist. Die Verstellung des Überrollkörpers aus der Lagerungsposition in die Freigabeposition kann hierdurch in derselben Ebene erfolgen, in der auch die Aufstellbewegung des Überrollkörpers in die Überschlagsposition erfolgt.

Diese Ausgestaltung des Verriegelungsmittels bzw. der Ausnehmung erlaubt somit eine besonders einfache Arretierung des Überrollkörpers in der Lagerungsposition. Das Verriegelungsmittel des Überrollkörpers, bspw. der Verriegelungsbolzen befindet sich in der Lagerungsposition derart in der Ausnehmung, dass er gegen eine Verstellung in die Überschlagsposition arretiert ist. Eine Aufstellung erfolgt erst, nachdem, bewirkt durch die Aktuatoreinheit, das Verriegelungsmittel mit dem Grundkörper außer Eingriff gelangt.

Besonders vorteilhafterweise weist die Ausnehmung eine Aussparung zur Aufnahme des Verriegelungsmittels auf. Diese sich in Aufstellrichtung des Überrollkörpers erstreckende Aussparung verhindert in besonders zuverlässiger Weise, dass es im Betrieb des Fahrzeugs zu ungewollten Fehlauslösungen kommt. Über die Ausprägung der Aussparung kann dabei der Grad der Arretierung bestimmt werden, wobei mit zunehmender Ausprägung die zur Auslösung erforderliche Kraft ansteigt.

Die Verstellung des Überrollkörpers aus der Lagerungsposition in die Freigabeposition ist grundsätzlich beliebig umgestaltbar. Grundsätzlich kann eine Verlagerung des gesamten Überrollkörpers erfolgen, um diesen in die Freigabeposition zu bewegen. Nach einer besonders vorteilhaften Ausgestaltung der Erfindung ist der Überrollkörper jedoch aus der Lagerungsposition in die Freigabeposition kippbar. Diese Ausgestaltung der Erfindung ermöglicht im Bedarfsfall eine besonders zuverlässige Auslösung. Einem Verklemmen, wie es möglicherweise im Falle eines Verschiebens des gesamten Überrollkörpers auftreten kann, wird besonders wirksam vorgebeugt.

Zwei Ausführungsbeispiele der Erfindung werden nachstehend mit Bezug auf die Zeichnungen näher erläutert. In den Zeichnungen zeigen:
- Fig. 1a: eine Prinzipskizze eines Überrollschutzsystems mit einem Überrollkörper in einer Lagerungsposition;
- Fig. 1b: eine Prinzipskizze des Überrollschutzsystems von Fig. 1a in einer Freigabeposition des Überrollkörpers und
- Fig. 2: eine perspektivische Ansicht einer zweiten Ausführungsform eines Überrollschutz- systems mit einem in einer Lagerungsposition angeordneten Überrollkörper.

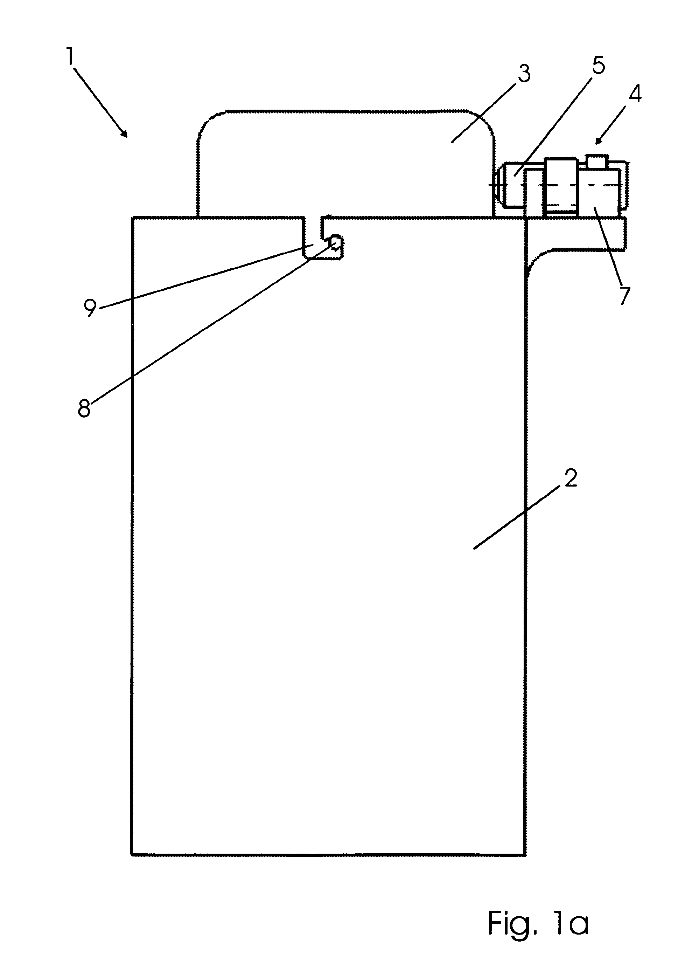

Fig. 1a zeigt in einer Prinzipskizze eine erste Ausführungsform eines Überrollschutzsystems 1 mit einem in einer Lagerungsposition angeordneten Überrollkörper 3. Der Überrollkörper 3 ist innerhalb des Grundkörpers 2 verschiebbar gelagert. Die Verschiebbarkeit des Überrollkörpers 3 besteht dabei sowohl in Längsachsenrichtung als auch in Querrichtung des Grundkörpers 2.

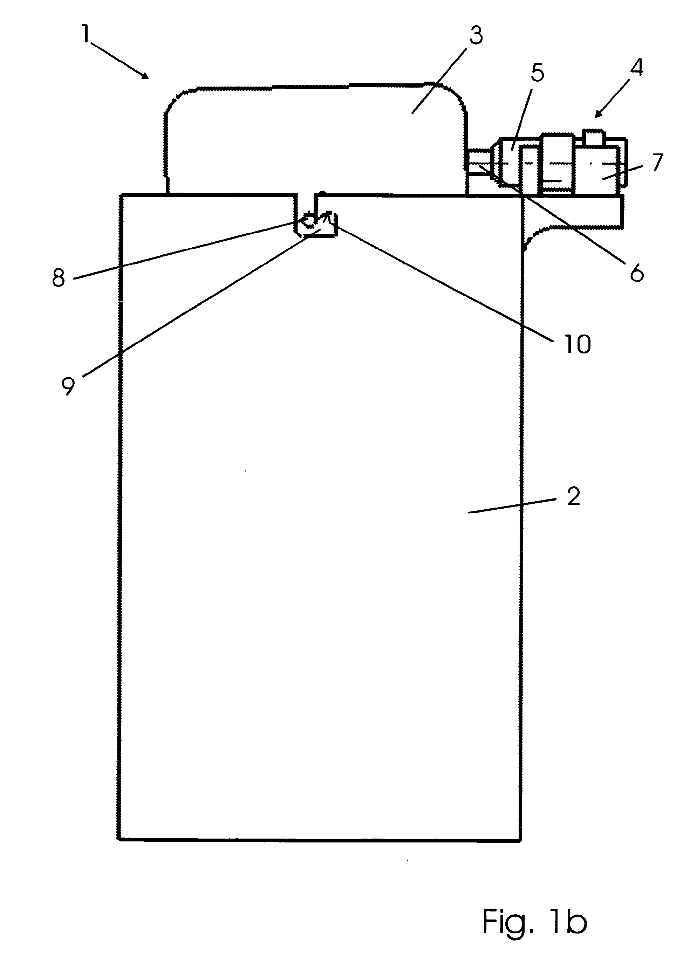

In der in Fig. 1a dargestellten Lagerungsposition ist der Überrollkörper 3 an dem Grundkörper 2 arretiert. Hierzu weist der Überrollkörper 3 einen von seiner Oberfläche vorstehenden Verriegelungsbolzen 8 auf, welcher in einer hakenförmigen Ausnehmung 9 des Grundkörpers 2 eingreift, so dass eine Verstellung des Überrollkörpers 3 in Längsachsenrichtung blockiert ist. Die hakenförmige Ausnehmung 9 weist dabei überdies eine Aussparung 10 auf, die an die Kontur des Verriegelungsbolzens 8 angepasst ist und ein versehentliches Verstellen des Überrollkörpers 3 aus der in Fig. 1a dargestellten Lagerungsposition in die in Fig. 1b dargestellten Freigabeposition zuverlässig verhindert.

Zur Überführung des Überrollkörpers 3 in eine hier nicht dargestellte Überschlagsposition ist es zunächst erforderlich, den Überrollkörper 3 aus seiner Lagerungsposition in die in Fig. 1b dargestellte Freigabeposition zu verstellen. Hierzu dient eine Aktuatoreinheit 4, welche in einer mit dem Grundkörper 2 verbundenen Aufnahmeeinheit 7 angeordnet ist. Die Aktuatoreinheit 4 weist ein Gehäuse 5 auf, aus dem im Falle einer Aktivierung ein Bolzen 6 herausschnellt. Die Aktuatoreinheit 4 ist dabei derart an dem Überrollkörper 3 angeordnet, dass der herausschnellende Bolzen 6 eine quer zur Längsachsenrichtung des Überrollkörpers 3 gerichtete Kippbewegung des Überrollkörpers 3 bewirkt, durch die der Verriegelungsbolzen 8 aus der Aussparung 10 herausgelangt, so dass sich der Verriegelungsbolzen 8 aus der Ausnehmung 9 herausbewegt.

In der in Fig. 1b dargestellten Freigabeposition bewirkt eine hier nicht dargestellte Antriebseinheit eine Verstellung des Überrollkörpers 3 in die hier ebenfalls nicht dargestellte Überschlagsposition.

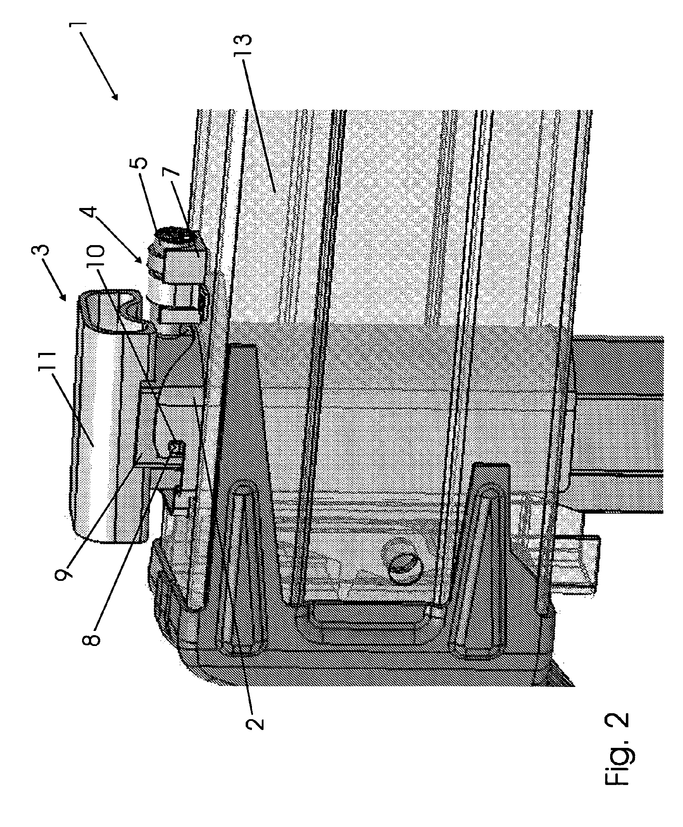

In Fig. 2 ist ein Konstruktionsbeispiel einer zweiten Ausführungsform des Überrollschutzsystems 1 dargestellt. Der Grundkörper 2 ist innerhalb einer Traverse 13 gehalten, welche sich in der Einbaulage des Überrollschutzsystems 1 am hier nicht dargestellten Fahrzeug über die gesamte Fahrzeugbreite erstreckt. Der Überrollkörper 3 besteht aus einer Kassette 12 sowie einem an einem oberen Ende angeordneten Deformationselement 11.

In der in Fig. 2 dargestellten Lagerungsposition greift der an der Kassette 12 angeordnete Verriegelungsbolzen 8 in eine Ausnehmung 10 des Grundkörpers 2 ein. Die Verstellung des Überrollkörpers 3 in die hier nicht dargestellte Freigabeposition erfolgt in analoger Weise zu dem in Fig. 1a und 1b dargestellten Ausführungsbeispiel. Eine Aktivierung der Aktuatoreinheit 4 bewirkt ein Herausschnellen eines Bolzens aus dem Gehäuse 5, so dass der Überrollkörper 3 derart verschoben bzw. verkippt wird, dass der Verriegelungsbolzen 8 mit der Ausnehmung 10 außer Eingriff gelangt und der Überrollkörper 3 in Längsachsenrichtung verstellt werden kann und so in die Überschlagsposition gelangt.

## Patentansprüche

1. Überrollschutzsystem für Kraftfahrzeuge, mit
- einem fahrzeugfest anordbaren Grundkörper (2),
- einem mittels einer Aktuatoreinheit (4) gegenüber dem Grundkörper (2) zwischen einer Lagerungsposition und einer Überschlagsposition verstellbaren Überrollkörper (3) und
- einer den Überrollkörper (3) in Richtung auf die Überschlagsposition vorspannenden Antriebseinheit,
**dadurch gekennzeichnet, dass**
- an dem Überrollkörper (3) ein Verriegelungsmittel (8) angeordnet ist, mittels dem der Überrollkörper (3) in der Lagerungsposition an dem Grundkörper (2) arretiert ist und
- der Überrollkörper (3) mittels der Aktuatoreinheit (4) gegenüber dem Grundkörper (2) aus der Lagerungsposition in eine Freigabeposition verstellbar ist, in der das Verriegelungsmittel (8) mit dem Grundkörper (2) außer Eingriff kommt.

2. Überrollschutzsystem nach Anspruch 1, **dadurch gekennzeichnet, dass** die Aktuatoreinheit (4) außenseitig, insbesondere im Bereich einer Ober- oder Unterseite des Grundkörpers (2) mit dem Überrollkörper (3) in Eingriff bringbar angeordnet ist.

3. Überrollschutzsystem nach Anspruch 1 oder 2, **dadurch gekennzeichnet, dass** die Aktuatoreinheit durch einen pyrotechnischen Aktuator (4) gebildet ist.

4. Überrollschutzsystem nach einem der vorhergehenden Ansprüche, **dadurch gekennzeichnet, dass** das Verriegelungsmittel durch einen von dem Überrollkörper (3) vorstehenden Verriegelungsbolzen (8) gebildet ist.

5. Überrollschutzsystem nach einem der vorhergehenden Ansprüche, **dadurch gekennzeichnet, dass** das Verriegelungsmittel (8) in der Lagerungsposition in einer einerseits offenen Ausnehmung (9) des Grundkörpers (2) angeordnet ist.

6. Überrollschutzsystem nach einem der vorhergehenden Ansprüche, **dadurch gekennzeichnet, dass** die Ausnehmung (9) eine Aussparung (10) zur Aufnahme des Verriegelungsmittels (8) aufweist.

7. Überrollschutzsystem nach einem der vorhergehenden Ansprüche, **dadurch gekennzeichnet, dass** der Überrollkörper (3) aus der Lagerungsposition in die Freigabeposition kippbar ist.

## Claims

1. A rollover protection system for motor vehicles, having
- a base body (2) that can be fastened to the vehicle in an integrated way,
- a rollover body (3) movable with respect to the base body (2) by means of an actuator unit (4) between a storage position and a rollover position, and
- a drive unit pretensioning the rollover body (3) in the direction toward the rollover position,
**characterized in that**
- a locking means (8) is disposed on the rollover body (3) by means of which the rollover body (3) is locked in the storage position at the base body (2), and
- the rollover body (3) is movable by means of the actuator unit (4) with respect to the base body (2) from the storage position into a release position, in which the locking means (8) comes disengaged from the base body (2).

2. The rollover protection system according to claim 1, **characterized in that** the actuator unit (4) is disposed outside, particularly in the region of a top side or bottom side of the base body (2), so it can be brought into engagement with the rollover body (3).

3. The rollover protection system according to claim 1 or 2, **characterized in that** the actuator unit is formed by a pyrotechnic actuator (4).

4. The rollover protection system according to one of the preceding claims, **characterized in that** the locking means is formed by a locking bolt (8) projecting from the rollover body (3).

5. The rollover protection system according to one of the preceding claims, **characterized in that** the locking means (8) is disposed in the storage position in a recess (9) of the base body (2) that is open on one side.

6. The rollover protection system according to one of the preceding claims, **characterized in that** the recess (9) has a notch (10) for receiving the locking means (8).

7. The rollover protection system according to one of the preceding claims, **characterized in that** rollover body (3) can be tilted out of the storage position into the release position.

## Revendications

1. Système de protection contre les tonneaux pour des véhicules automobiles, comprenant
- un corps de base (2) pouvant être agencé de manière solidaire au véhicule,
- un corps de protection contre les tonneaux (3) réglable au moyen d'une unité d'actionneur (4) par rapport au corps de base (2) entre une position de rangement et une position de retournement et
- une unité de commande qui précontraint le corps de protection contre les tonneaux (3) en direction de la position de retournement,
**caractérisé en ce que**
- le corps de protection contre les tonneaux est équipé d'un moyen de verrouillage (8) grâce auquel le corps de protection contre les tonneaux (3) est bloqué dans la position de rangement sur le corps de base (2) et
- le corps de protection contre les tonneaux (3) est réglable au moyen de l'unité d'actionneur (4) par rapport au corps de base (2) de la position de rangement à une position de libération dans laquelle le moyen de verrouillage (8) est désolidarisé du corps de base (2).

2. Système de protection contre les tonneaux selon la revendication 1, **caractérisé en ce que** l'unité d'actionneur (4) est agencée sur la face externe, en pouvant être mise en prise, en particulier dans la zone d'une face supérieure ou inférieure du corps de base (2), avec le corps de protection contre les tonneaux (3).

3. Système de protection contre les tonneaux selon les revendications 1 ou 2, **caractérisé en ce que** l'unité d'actionneur est formée par un actionneur pyrotechnique (4).

4. Système de protection contre les tonneaux selon une des revendications précédentes, **caractérisé en ce que** le moyen de verrouillage est formé par un boulon de verrouillage (8) dépassant du corps de protection contre les tonneaux (3).

5. Système de protection contre les tonneaux selon une des revendications précédentes, **caractérisé en ce que** le moyen de verrouillage (8) est agencé dans la position de rangement dans un évidement (9) ouvert sur une face du corps de base (2).

6. Système de protection contre les tonneaux selon une des revendications précédentes, **caractérisé en ce que** l'évidement (9) présente une encoche (10) destinée à recevoir le moyen de verrouillage (8).

7. Système de protection contre les tonneaux selon une des revendications précédentes, **caractérisé en ce que** le corps de protection contre les tonneaux (3) peut être basculé de la position de rangement à la position de libération.
